# EUROPEAN PATENT APPLICATION

(11) **EP 4 099 218 A1**
(43) Date of publication of application: **07.12.2022**
(21) Application number: 21177774.3
(22) Date of filing: 04.06.2021
(51) Int. Cl.: G06K 9/46, G06K 9/62, G06K 9/00

(54) **PRODUCT AUTHENTICATION USING SECURITY MARKS AND OPTICAL MEANS**

(71) Applicant: Klöckner Pentaplast Europe GmbH & Co. KG, 56412 Heiligenroth (DE)
(72) Inventor: Jaeger, Sebastian, 56412 Heiligenroth (DE)
(74) Representative: Peterreins Schley

(57) **Abstract**

The present disclosure relates to a method for an optical product authentication, the method comprising providing (100) an authentic product comprising a first orientation mark and a first security mark, wherein the first security mark comprises a plurality of randomly distributed reflecting and/or luminescent particles; recording (200) a reference image including the first orientation mark and the first security mark from a position relative to the first orientation mark; providing (300) a product to be authenticated comprising a second orientation mark and a second security mark, wherein the second security mark comprises a plurality of reflecting and/or luminescent particles; recording (400) on a mobile device a recognition image including the second orientation mark and the second security mark from a position relative to the second orientation mark; and determining (500) whether the product to be authenticated is the authentic product or a counterfeit by carrying out an authentication process comprising the following steps: determining (510) a deviation between the reference image and the recognition image based on a digital image analysis, wherein said deviation is associated with a difference between the recording position relative to the first orientation mark and the recording position relative to the second orientation mark; computing (540) a projection image by projecting the recognition image on the reference image or the reference image on the recognition image based on the determined deviation; comparing (580) the computed projection image with the respective reference image or recognition image.

## Description

### Technical Field

This specification relates to methods for an optical product authentication. Associated aspects concern security marks, computer programs including computer-executable instructions for performing methods for an optical product authentication and a database.

### Background

There is a growing and ongoing interest in the development of robust methods, security marks and systems for optical product authentication. Some prior art techniques use security marks based on randomly distributed features (e.g., particles, fibers, etc.). However, in particular when executed by an inexperienced end-consumer on mobile devices such as a smart phone or a tablet, the optical product authentication based on randomized features may result in a relatively high amount of incorrect authentications (or else result in undesirably high burden on processing power and memory space). Some of these issues are related to an inexperienced end-user performing the authentication under less than ideal conditions, such as a moving the (hand-held) mobile device during image acquisition, performing the authentication under poor lighting conditions or authenticating a soiled security mark.

Moreover, some of prior art security marks can be replicated using modern and continuously improving printing technologies in such a way that encoded information presented on the replicated mark is reproduced sufficiently well resulting in the replicated mark being incorrectly identified as an authentic security mark. As a consequence, in some cases, a counterfeit product (e.g., delivered to a user) may be erroneously identified as an authentic product.

Another problem encountered by some prior art techniques is related to the fact that some methods and systems used to identify security marks are not accurate and sophisticated enough to correctly determine whether a security mark being identified is the authentic security mark or a counterfeit one. Thus, in some cases, these methods and systems are often prone to produce false positives or/and false negatives as a result of the determination process.

Therefore, there is a need in developing new efficient techniques capable of solving some or all of the above-mentioned problems.

### Summary

A first aspect of the present disclosure relates to a method for an optical product authentication. The method of the first aspect includes providing an authentic product comprising a first orientation mark and a first security mark, wherein the first security mark comprises a plurality of randomly distributed reflecting and/or luminescent particles. The method further comprises recording a reference image including the first orientation mark and the first security mark from a position relative to the first orientation mark. The method of the first aspect further comprises recording a reference image including the first orientation mark and the first security mark from a position relative to the first orientation mark. The method of the present disclosure further includes providing a product to be authenticated comprising a second orientation mark and a second security mark, wherein the second security mark comprises a plurality of reflecting and/or luminescent particles. The method further includes recording on a mobile device a recognition image including the second orientation mark and the second security mark from a position relative to the second orientation mark. The method of the first aspect further includes determining whether the product to be authenticated is the authentic product or a counterfeit by carrying out an authentication process comprising the step of determining a deviation between the reference image and the recognition image based on a digital image analysis, wherein said deviation is associated with a difference between the recording position relative to the first orientation mark and the recording position relative to the second orientation mark. The further steps for performing the authentication process include computing a projection image by projecting the recognition image on the reference image or the reference image on the recognition image based on the determined deviation and comparing the computed projection image with the respective reference image or recognition image.

In a second aspect, the present disclosure relates to a method for an optical product authentication. The method of the second aspect includes providing an authentic product comprising a first security mark. The first security mark of the present techniques comprises two or more sets of randomly distributed luminescent particles, wherein at least one set of randomly distributed luminescent particles from the two or more sets has a first decay time and another set of randomly distributed luminescent particles from the two or more sets has a second decay time that is different from the first decay time. The method further involves illuminating the first security mark with an electromagnetic radiation which causes the two or more sets of randomly distributed luminescent particles to luminesce and terminating the electromagnetic radiation. After termination of said electromagnetic radiation, the method provides a plurality of reference images including the first security mark at predetermined points in time based on the decay time of at least one of the sets of randomly distributed luminescent particles. The method according to the second aspect further involves providing a product to be authenticated comprising a second security mark, wherein the second security mark comprises a plurality of luminescent particles. The method further includes illuminating the second security mark with electromagnetic radiation, in particular electromagnetic radiation which is able to create luminescence in the two or more sets of randomly distributed luminescent particles. The electromagnetic radiation is then terminated. After termination of said electromagnetic radiation, the next step of the method comprises providing a plurality of recognition images including the second security mark at predetermined points in time, in particular predetermined points in time based on the decay time of at least one of the sets of randomly distributed luminescent particles, and comparing the plurality of reference images with the plurality of recognition images based on a digital image analysis, in particular comparing a time-dependent series of the plurality of reference images with a time-dependent series of the plurality of recognition images based on a digital image analysis. Then, the method of the second methods includes determining whether the product to be authenticated is the authentic product or a counterfeit based on the comparing step.

In a third aspect, the present disclosure relates to a security mark used in the first and second aspects. The security mark of the third aspect comprises a plurality of randomly distributed reflecting and/or luminescent particles. The particles of the third aspect have a particle size of larger than 0.5 µm. The particles of the third aspect reflect and/or luminesce in a color that is only reproducible by a laser or ink jet printer by a half-tone or dithering process.

In a fourth aspect, the present disclosure relates to a security mark used in the first and second aspects. The security mark of the fourth aspect comprises a plurality of randomly distributed reflecting and/or luminescent particles, wherein the particles have an particle size of larger than about 0.5 µm. The particles of the fourth aspect reflect and/or luminesce in at least two different colors, in particular in at least 5 different colors.

The techniques of the first to fourth aspects may have advantageous technical effects:
Firstly, some aspects of the present techniques involve security marks with reflecting and/or luminescent particles having particular spatial distributions and physical characteristics. This may reduce the risk of replicating the security marks of the present specification using, for example, modern printers. Furthermore, the present specification uses information associated with the spatial distributions and physical characteristics of the reflecting and/or luminescent particles of the security mark in a sophisticated way that may allow to improve the performance of an authentication process compared to some prior art techniques.

Secondly, a computationally demanding comparison of patterns encoded in security marks of an authentic product and a product to be authenticated can be avoided by selecting appropriate reference images on which a security mark of the authentic product is recorded. Moreover, the present techniques may reduce issues associated with differences in position between the imaging device used at the stage of recording the security mark on the authentic product and the imaging system on the mobile device used for authenticating a product to be authenticated. Therefore, the authentication process of the present disclosure may be more reliable and computationally efficient compared to some prior art techniques.

Thirdly, some aspects of the present techniques may be beneficial in excluding from the authentication proper those reflecting and/or luminescent particles that are sensitive to different recording positions of an imaging device and, as a consequence, may not be properly recorded on all or some of the reference images. Therefore, the authentication process of the present disclosure may be able to perform better than that of some prior art techniques.

The definitions presented below have general applicability to this specification.

The term "orientation mark" as used in the present specification is not particularly limited and may refer to visual features provided on a product, e.g., on a packaging of the product. For example, a label, human-readable information such as a word or a sentence, a QR-code, a barcode or a geometric feature such as a rectangle provided on the packaging of the product may represent orientation marks. Orientation marks may also include only a part of the label, QR-code, barcode, etc. Additionally or alternatively, in some embodiments, the term "orientation mark" may refer to a printed, embossed, engraved or etched feature. Additionally or alternatively, in some embodiments, the term "orientation mark" does not refer to pigments or particles individually discernible to the human eye, for instance pigments or particles having a particle size of above about 50 µm, more specifically above about 100 µm, and in particular above about 500 µm. The term "orientation mark" does not refer to randomly distributed particles and in particular not to the plurality of randomly distributed reflecting and/or luminescent particles.

The term "security mark" as used herein is not particularly limited and may include security marks in the form of labels, films or coatings. For instance, reflecting and/or luminescent particles may be incorporated into a distinct label which may be affixed onto a product via an adhesive layer. Alternatively, said particles (e.g., pigments) may be incorporated into a film or foil which is used to package a product (for example, a file or foil may be wrapped around the product). In other embodiments, the label may be a coating which is applied onto a product, packaging or another label. It should be further understood that the term "security mark" implies that the reflecting and/or luminescent particles are arranged on or within the security mark such that at least some of them are recognizable for an optical imaging system. Security marks may be partially transparent, semi-transparent or even fully opaque in certain parts. Transparency here refers to transparency in the visible range. In some embodiments, it may be advantageous that the optical properties of the label, film or coating hosting the particles do not impair the reflection and/or luminescent characteristics of the said particles.

The relative positioning of the security mark to the orientation mark is not particularly limited. However, in some embodiments, it may be advantageous that the security mark is provided on top of the orientation mark. In some embodiments, the combination of security mark and orientation mark may be in the form of a label, optionally provided with an adhesive layer, wherein the orientation mark is arranged on top of the adhesive layer and the security mark is arranged on top of the orientation mark.

The term "reference image" used in the present disclosure is not particularly limited and may include an image (for example, a digital image constituted by an area of pixels) recorded by an imaging device used at the stage of registering or marking an authentic product. The imaging device, e.g., a digital camera can also be mounted on or be part of other devices in a production line. Moreover, the term "reference image" should be broadly construed to not only include an original digital image captured by an imaging device but also information obtained by digitally post-processing the corresponding digital image recorded by the imaging device. For instance, the term "reference image" may also include information regarding the location, size and color of particles or trigonometric information regarding a set of particles which is obtained by digitally processing the recorded digital image. For example, said digital images may be represented in an image space with pixel representation, wherein each data point is defined by a set of discrete quantities such as, e.g., its spatial coordinates and a color.

Likewise, the term "recognition image" according to the present disclosure is not particularly limited and may include a digital image recorded by an imaging device, for example, by a mobile device, such as a smart phone camera or a tablet, at the stage of authentication a product by a user. As for the aforementioned reference images, the term "recognition image" as used herein may not only include an original digital image captured by an imaging device, but also information obtained by digitally post-processing the corresponding digital image recorded by the corresponding imaging device.

Along the same lines, the term "projection image" is not particularly limited and may *i.a.* involve projecting the entirety or a part of the recognition or reference image or projecting the entirety or a part of information derived by digitally processing the reference or recognition image. In some non-limiting examples, this may include projecting the entirety or a part of information derived by digitally post-processing the reference image on the recognition image, or vice versa, projecting the entirety or a part of information derived by digitally post-processing the recognition image on the reference image. For instance, as a non-limiting example, the projection image may be obtained by projecting a part of the information regarding the location and size of particles obtained by digitally processing the reference image.

The term "reflecting particles" used in the present specification can refer to particles or pigments which possess a high reflectance (for example, equal to or larger than about 50% or equal to or larger than about 90%), at least particularly, in the visible spectrum (i.e., for wavelengths from about 380 to about 750 nanometers) or in a certain narrow range within the visible spectrum. Thus, said particles may be able to reflect a significant part of an incident electromagnetic radiation coming, e.g., from an LED light, a flash or an ambient light. In some examples, the particles or pigments can reflect almost all or a significant part of the incident light (for example, equal to or larger than about 90% or equal to or larger than about 50%) back to its source with negligible scattering, in which case they may be referred to as the retroreflective particles (e.g., spherical particles made of glass or titanium dioxide may possess this property). In other examples, the "reflecting particles" can reflect a significant part of an incident radiation (for example, equal to or larger than about 90% of the incident radiation, or equal to or larger than about 50% of the incident radiation) in a narrow spectral range (for instance, within about 1% or less of the visible spectrum, or within about 10% or less of the visible spectrum, or within about 20% or less of the visible spectrum) depending on the angle of view and/or on the angle of incidence. In this case, the reflecting particles may be referred to as iridescent particles or pigments (the iridescent effect is based on diffraction or interference known in the art), which in some examples may comprise a substrate material such as mica, silicate or aluminum oxide coated, for example, with titanium dioxide, iron oxide or chromium oxide.

Accordingly, the term "luminescent particles" may refer to particles or pigments that comprise a luminescent material (for instance, to an extent of about 20 to about 100 wt% or of about 50 to about 100 wt%). The term "luminesce" as used herein should be construed broadly including different types of luminescence known in the art, such as, for example, phosphorescence and/or fluorescence. The "luminescent particles" of the present specification are capable of luminescing (i.e., emitting) light after being excited with electromagnetic radiation that lies in the corresponding spectral range (e.g., in the ultraviolet (UV) or infrared (IR) range contained, for example, in an ambient light) provided by one or more absorption lines of the constituent luminescent materials. In some embodiments, the luminescent particles are excited by an LED light or a flash and their absorption spectra lies in the visible range. The spectral range of the luminescent light (i.e., the color of the light emitted by the excited particles) may be varied by using different luminescent materials or their mixtures. In some embodiments, the "luminescent particles" may luminesce light in the visible spectrum. In other embodiments, the process of luminescence may take place in the non-visible range. The luminescence lifetime of the luminescent particles (is the parameter that describes the decay of the luminescent particles from the excited state to their lower energetic states (e.g., to the ground states) after turning off of the pumping electromagnetic radiation (e.g. a flash). For example, the luminescence lifetime (or decay time as used herein) may be defined based on the luminescence radiation emitted by the excited luminescent particles, for instance, based on its decaying intensity (e.g., exponentially decaying intensity). Thus, the decay time may be defined as the time at which the luminescence intensity reduces by e times as compared to its initial (or/and maximal) value. In other examples, the decay time may be defined as a half-life time, i.e., the time required for its initial (or/and maximal) value to decrease to half that value. Alternatively or additionally, the decay time may characterize an exponential decay of the excited luminescent particles, i.e., the decay time may be defined as a time during which a number of initially excited luminescent particles reduces by e times. In other examples, the decay time may be defined as a half-life time, i.e., the time required for the number of the initially excited luminescent particles to decrease to half the initial value. In still other examples, the luminescence lifetime may be referred to the average time the luminescent particle spends in its excited state before a photon is emitted. The decay time may depend on the constituent luminescent materials and can vary in a large time interval, for instance, from about 1 millisecond to about 10 hours. In some examples, when the decay time is short (for instance, smaller than or equal to about 600 s specifically smaller than or equal to about 60 s and in particular smaller than or equal to about 15 s, particles excited by, for example, a flash from a smartphone can emit an amount of radiation which is sufficient to allow authentication under poor lighting conditions (e.g. relatively bright ambient lighting conditions) in a time period which is short enough to allow authentication on a mobile device by an end-user.

The term "plurality of randomly distributed reflecting and/or luminescent particles", or like expressions, is not particularly limited and generally corresponds to the number of particles required to allow a unique characterization of a product and to allow its authentication. As will be explained later-on, the number of required particles can be a s low as three for some authentication methods, however, larger numbers may be useful in other methods. Accordingly, in some embodiments, the plurality of randomly distributed reflecting and/or luminescent particles may include an amount of more than about 3, specifically more than about 6, and in particular more than about 12 particles, for instance between about 3 and about 20,000, more specifically between about 6 and about 5,000 and in particular between about 12 and about 1,000 particles. In some examples, the plurality of randomly distributed reflecting and/or luminescent particles are randomly distributed in an average number of the pigment particles per cm² of surface area covered/containing the particles is in the range of about 1 to about 100, more specifically about 2 to about 50, and in particular about 3 to about 25. The average number of particles may be calculated by determining the area of the security mark covered/containing particles, counting the number of particles within said area, dividing the determined number by said area and converting the result to the unit particles per cm².

### Description of the figures

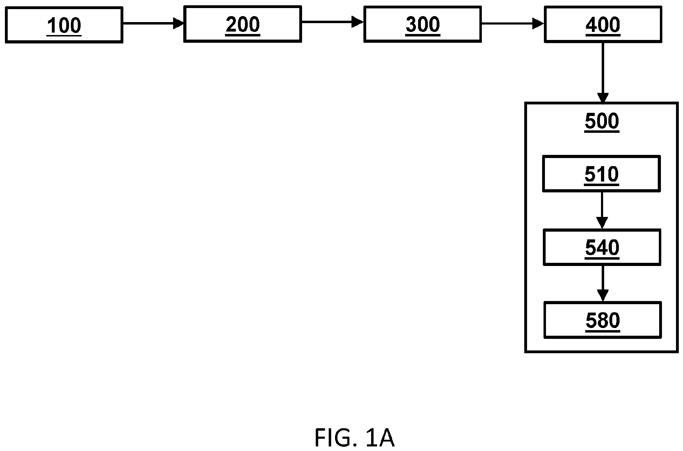

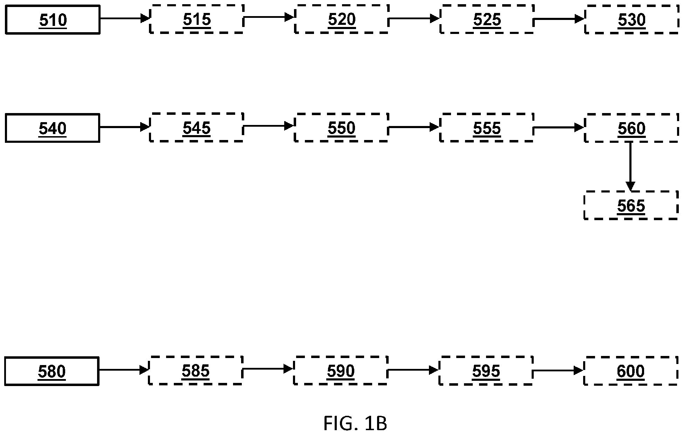

**FIGS. 1A** and **1B** show flow diagrams illustrating a method for an optical product authentication according to the first aspect.

### Detailed Description

An overview over the first aspect of the present disclosure related to a method for an optical product authentication will be given in connection with flow charts shown in **FIGS. 1A** and **1B****.**

**FIGS. 1A** and **1B** discloses and proposes a method for an optical product authentication in accordance with the first aspect of the present disclosure. The method steps of the corresponding independent claim are summarized inside boxes drawn by solid lines in **FIGS. 1A** and **1B**, while the method steps of some dependent claims are shown inside boxes depicted by dashed lines. The present technique for an optical product authentication includes providing 100 an authentic product comprising a first orientation mark and a first security mark. In some examples, as mentioned above, the first orientation mark may represent a visually well discernible feature (e.g., with a known shape) provided on the packaging of the authentic product such as, e.g., a label, QR-code, barcode or other features known in the art. In other examples, the first orientation mark may comprise only a certain (spatial) part of one or more of the listed features. The first security mark comprises a plurality of randomly distributed reflecting particles. Methods for obtaining such randomized distributions of particles in bodies or on surfaces are known in the art and, for instance, described in EP 2 318 286 B1 which is incorporated herein by reference thereto. In some examples, the reflecting particles can be randomly distributed on the whole surface of the first security mark or only on its preselected part. In some embodiments, said reflecting particles can be reflective, retroreflective or iridescent particles. In other examples, the reflecting particles can be reflective, retroreflective or iridescent pigments in accordance with the above definitions. In yet other examples, any mixture of said particles and/or pigments may also be contemplated in the present specification. In addition or alternatively, the first security mark can comprise a plurality of randomly distributed luminescent particles. The random distribution of the luminescent particles may be achieved in a way similar to that used for the reflecting particles. In accordance with the above discussions, the luminescent particles or pigments may emit (i.e., luminesce) light, for example, in the visible range (i.e., wavelengths above about 380 nm and below about 750 nm), if they are excited with electromagnetic radiation (produced, for example, by an LED light, a flash, an ambient light or some other source providing UV light having the wavelength range of about 100 to about 380 nm or IR light having the wavelength range of about 750 to about 1000 nm).

The next step of the present technique can include recording 200 a reference image including the first orientation mark and the first security mark from a position relative to the first orientation mark. In some examples, in accordance with the definitions above, the reference image may be recorded by an imaging device used at the stage of registering or marking the authentic product. In some examples, a plurality of reference images including the first orientation mark and the first security mark from a plurality of positions relative to the first orientation mark may be recorded. This may facilitate the later authentication by having a higher likelihood of authenticating the product on basis of a reference image/recognition image-pair which is similar in terms of acquisition angle and distance. In some examples, at least a portion of the reference image is acquired using a flash. For example, the recording 200 step can be carried out right after the plurality of randomly distributed reflecting and/or luminescent particles are excited by the corresponding electromagnetic radiation. In an example, the imaging device may be a camera (e.g., a digital camera) located at a certain distance and oriented in a certain perspective with respect to the authentic product (e.g., with respect to the first orientation mark or the first security mark of the authentic product). In some examples, the perspective may be defined by a set of angles indicative of a current camera orientation with respect to some global (i.e., preselected and fixed) coordinate system. For example, said set of angles may include one or more of an azimuthal rotation angle, a polar rotation angle, or an axial rotation angle that characterize the camera perspective. In some examples of the present techniques, recording 200 the reference image from the position relative to the first orientation mark can include recording the reference image at a first recording angle and at a first recording distance relative to the first orientation mark of the authentic product. In an example and in accordance with the above discussions, the first recording angle can be selected from the set of angles that describe a perspective of an imaging device (for example, a camera) used to capture the reference image of the authentic product. Thus, in some examples, the first recording angle may be an azimuthal rotation angle, a polar rotation angle, or an axial rotation angle selected from the set of angles characterizing the perspective of the imaging device. In other examples, more than one angle can be selected from said set of angles to characterize recording the reference image (e.g., by the imaging device like a camera) from the position relative to the first orientation mark. In some examples, the first recording distance can represent a distance between the imaging device and the first orientation mark of the authentic product, for instance a distance between the center of the first orientation mark and the imaging device. In some examples, the reference image can be further digitally post-processed, e.g. as discussed in more detail below with respect to the recognition image.

The techniques of the present disclosure can further include providing 300 a product to be authenticated. The product to be authenticated will typically comprise an orientation mark and a security mark (or else the product to be authenticated will be immediately recognizable as falsified). For the purposes of this disclosure, these marks will be referred to as a second orientation mark and a second security mark. In some examples, the second orientation mark may represent a visually well discernible feature that can be similar tor identical to the first orientation mark of the authentic product. In some examples of the present techniques, the second security mark can comprise a plurality of reflecting particles. In addition or alternatively, the second security mark can comprise a plurality of luminescent particles.

In context of the security mark of the product to be authenticated, it should be understood that the term "particles" should be broadly interpreted to also include falsification attempts, e.g. printed features which are supposed to imitate particles of a first security mark. However, in some examples, the reflecting and/or luminescent particles of the second security mark of the product to be authenticated may also have similar properties as those described above with respect to the reflecting and/or luminescent particles of the first security mark of the authentic product.

The next step of the method can include recording 400 on a mobile device a recognition image including the second orientation mark and the second security mark from a position relative to the second orientation mark. The recognition image can be recorded by the mobile device at the stage of authentication a product by a user (for example, upon receipt of said product). In an example, the mobile device may be a smart phone camera or a tablet located at a certain distance and oriented in a certain perspective with respect to the product to be authenticated (e.g., with respect to the second orientation mark or the second security mark of the product to be authenticated). In an example, the recording 400 step can be carried out after (e.g. between about 1 ms to about 5 s after) the plurality of reflecting and/or luminescent particles are excited by the corresponding electromagnetic radiation, e.g. by using the flash function of a smart phone or tablet. In some examples, the perspective may be defined by a set of angles indicative of a current orientation of the mobile device with respect to some global (i.e., preselected and fixed) coordinate system. For example, such set of angles may include one or more of an azimuthal rotation angle, a polar rotation angle, or an axial rotation angle that characterize the perspective of the mobile device.

In some examples of the present techniques, recording 400 on the mobile device the recognition image from the position relative to the second orientation mark can include recording the recognition image at a second recording angle and at a second recording distance relative to the second orientation mark of the product to be authenticated. The second recording angle and/or distance may be different to the recording angle and/or distance of the (first) recording angle and/or distance relative to the second orientation mark. This may facilitate the later authentication process by providing a recognition image that more closely matches the reference image(s). In an example and in accordance with the above discussions, the second recording angle can be selected from the set of angles that describe a perspective of the mobile device (e.g., a smart phone camera or a tablet) used to capture the recognition image of the product to be authenticated. Thus, in some examples, the second recording angle may be an azimuthal rotation angle, a polar rotation angle, or an axial rotation angle selected from the set of angles characterizing the perspective of the mobile device. In other examples, more than one angle can be selected from said set of angles to characterize recording the reference image (e.g., by the mobile device like a smart phone camera or a tablet) from the position relative to the second orientation mark. In some examples, the second recording distance can stand for a distance between the mobile device and the second orientation mark of the product to be authenticated.

In some examples, the recognition image can be further digitally post-processed. In some examples, the recognition image can be digitally post-processed such that information associated with ambient radiation as recorded on the recognition image is digitally subtracted. For example, pumping electromagnetic radiation used to excite luminescent particles (for example, a flash of the mobile device, a smartphone LED) may be diffusely scattered by the product and surrounding objects and then recorded by the mobile device (e.g., a smartphone or a tablet). In this case, it may be advantageous to subtract the corresponding information related to the pumping electromagnetic radiation from the recognition image, as this may facilitate subsequent authentication process. In other examples, for the same reason, it can be beneficial to subtract the information related to the ambient radiation from the recognition image even if no pumping is required (as in the case when the reflecting particles are used) or when the ambient radiation serves as an excitation source for the luminescent particles. For this purpose, in some examples, the recorded recognition image itself can be used to determine the information associated with the ambient radiation as recorded on the recognition image. In other examples, a representative image of the ambient radiation can be recorded (e.g., on the mobile device) before or after the recognition image is recorded on the mobile device. In some examples, a position at which the representative image is recorded is different from that used for recording the recognition image. Therefore, in some examples, the representative image may not include the second orientation mark and/or the second security mark. In yet other examples, an auxiliary device can be used to reduce ambient radiation. For example, the auxiliary device may be an attachment blocking ambient light mounted on the mobile device or it may be a separated device connected (e.g., via Bluetooth) to the mobile device. In some examples, the auxiliary device may be placed in contact with or in proximity to the second orientation mark and the second security mark when the recognition image is recorded to reduce or minimize the capturing the ambient radiation by the mobile device (e.g., via said auxiliary device).

The next step of the present techniques can include determining 500 whether the product to be authenticated is the authentic product or a counterfeit by carrying out an authentication process. It should be understood that, although a certain order of steps is described below, the order of some steps can be altered, in particular depending on when the reference and/or recognition image is processed. It will be understood that some of these steps can be done as early as immediately after the reference image acquisition but also delayed until needed, i.e. until the actual product authentication. In other words, some of the steps described below in context of the step of authentication 500 can precede the actual request for authentication which is initiated by the user on his/her mobile device. Thus, the order of steps and timeline in the below discussion is exemplary only an all variations are the subject-matter of the present application.

In the present techniques, the authentication process 500 can involve the step of determining 510 a deviation between the reference image and the recognition image based on a digital image analysis. For example, said deviation can be associated with a difference between the recording position relative to the first orientation mark and the recording position relative to the second orientation mark. In some examples, the deviation between the digitally processed reference and recognition images can be directly mapped to the corresponding (physical) positions and/or perspectives of the imagining device (e.g., a digital camera) when recording the reference image and the camera of the mobile device (e.g., a smart phone camera or a tablet) when recording the recognition image. For example, the deviation between the digitally processed reference and recognition images may be discernable if a ratio of the distance (and/or angle) between the imaging device and the first orientation mark (or the first security mark) of the authentic product to the distance between the camera on the mobile device and the second orientation mark (or the second security mark) of the product to be authenticated is substantially different from unity (for example, less than or equal to about 0.8 or less than or equal to about 0.5 or less than or equal to about 0.2 or larger than or equal to about 1.2 or larger than or equal to about 2.0 or larger than or equal to about 5.0). In other examples, similar criteria may be introduced with respect to the perspectives of the digital camera and the smart phone camera used when recording the reference and recognition images, which are characterized by the corresponding set of angles in accordance with the discussions above.

In some embodiments, the step of determining 510 the deviation between the reference image and the recognition image based on the digital image analysis may include determining 515 a deviation between the first orientation mark as recorded on the reference image and the second orientation mark as recorded on the recognition image. In some examples, using the first and second orientation marks as recorded on the respective images may facilitate determining said deviation, as the orientation marks (representing, for example, the entirety or a part of label, QR-code, barcode etc. as noted above) are typically of a known shape and are visually well-identifiable features provided on the respective products.

In other examples, determining 510 the deviation between the reference image and the recognition image based on the digital image analysis may include determining a deviation between the first orientation mark as recorded on the reference image and the second security mark as recorded on the recognition image. In addition or alternatively, determining 510 the deviation between the reference image and the recognition image can include determining a deviation between the first security mark as recorded on the reference image and the second security mark as recorded on the recognition image. In addition or alternatively, determining 510 the deviation between the reference image and the recognition image can include determining a deviation between the first security mark as recorded on the reference image and the second orientation mark as recorded on the recognition image.

In the present techniques, the step of determining 510; 515 the deviation can comprise calculating 520 a difference between the first orientation mark as recorded on the reference image and the second orientation mark as recorded on the recognition image. In some examples, the difference between the first orientation mark as recorded on the reference image and the second orientation mark as recorded on the recognition image can be associated with a difference between the first recording angle and the second recording angle. In addition or alternatively, said difference can be associated with a difference between the first recording distance and the second recording distance. In yet other examples and in agreement with the above discussions, a difference between the first orientation mark as recorded on the reference image and the second orientation mark as recorded on the recognition image can be associated with a difference between two or more angles selected from the set of angles that characterize the perspective of the imaging device with respect to the authentic product, and the corresponding angles selected from the set of angles that characterize the perspective of the mobile device with respect to the product to be authenticated.

In some examples of the present techniques, the step of determining 510; 515 the deviation can further comprise mapping 525 the first orientation mark as recorded on the reference image to the second orientation mark as recorded on the recognition image. For example, such mapping can include calculating an image transformation 530 that maps the first orientation mark as recorded on the reference image to the second orientation mark as recorded on the recognition image. In some examples, calculating the image transformation can include applying algorithms for the digital registration for mapping the first and second orientation marks as recorded on the corresponding images. For example, the digital registration can be used in calculating such the image transformation applied to the reference image that a deviation between the first orientation mark as recorded on the reference image and the second orientation mark as recorded on the recognition image is minimal. In some examples, minimizing the deviation can include applying the image transformation to each pixel of the first orientation mark as recorded on the reference image to match it with the corresponding pixel of the second orientation mark as recorded on the recognition image. For example, said image transformation can include one or more of translation, scaling, rotation or displacement operations, as well as Euler transformation, similarity map, B-spline mapping or spline kernel transformation, which is a list of several non-exhaustive examples. In other examples, minimizing the deviation can include applying said image transformation to a preselected set of pixels of the first orientation mark, for example, when transforming all pixels of the first orientation mark is computationally expensive or not possible at all due to limited hardware resources. In a next step, the image transformation can be iteratively improved by using different measures of deviations between the transformed pixels of the reference image and the corresponding pixels of the recognition image. In some examples, the transformed pixels of the first orientation mark of the reference image can be taken for this improvement procedure. In other examples, only the preselected set of pixels of the first orientation mark can be sufficient for this purpose. For example, various measures of deviation may be considered for use in this context, such as, for example, the mean squared difference, mutual information, normalized mutual information, normalized correlation coefficient, kappa statistics, or other methods known in the art. Then, one or more of optimization procedures (e.g., gradient descent, nonlinear conjugate gradient, or Robbins-Monro algorithms) can be applied to iteratively converge to the optimal image transformation. In some examples of the colored orientation marks, mapping the first orientation mark to the second orientation mark can involve not only the use of spatial coordinates of pixels, but also their colors represented by a set of discrete quantities (e.g., by the RGB scheme).

Alternatively, the step of determining 510; 515 the deviation in the present techniques can include mapping 525 the second orientation mark as recorded on the recognition image to the first orientation mark as recorded on the reference image. The methods discussed in the preceding paragraph equally apply to this embodiment. For example, such mapping can include calculating 530 an image transformation that maps the second orientation mark as recorded on the recognition image to the first orientation mark as recorded on the reference image. In this case, calculating the image transformation can include applying algorithms for the digital registration for mapping the second orientation mark as recorded on the recognition image to the first orientation mark as recorded on the reference image in a manner similar to that disclosed above with respect to the mapping of the first orientation mark as recorded on the reference image to the second orientation mark as recorded on the recognition image.

In the following, the computing 540 of a projection image by projecting the recognition image on the reference image or the reference image on the recognition image based on the determined deviation will be introduced in more detail. Data processing steps will be described for the reference image and the recognition image. For convenience and brevity of language, sometimes reference is made to particles even though the skilled person will appreciate that, in the context of the reference and recognition images, such references actually refer to the imaged (pixel) representations of particles (or putative particles in case of recognition images).

In some examples of the present techniques, computing 540 the projection image can comprise identifying 545 reflecting and/or luminescent particles from the plurality of randomly distributed reflecting and/or luminescent particles on the reference image. Said identifying step is not particularly limited and may include the selection of any number of particles according to any selection criteria. For instance, identifying step 545 may include selecting a number of brightest reflecting and/or luminescing particles (e.g., three, four, five, or more particles). In other instances, the identifying step 545 may include selecting that a number of largest particles. In yet other instances, identifying step 545 may include selecting a number of reflecting and/or luminescent particles based on color or shape. In still other instances, the identifying step 545 may include selecting particles based on decay time or selecting particles most strongly luminescing after a given time interval (e.g. about 5 ms to about 5 s) after excitation (e.g. by exposure to a flashlight).

Moreover, the identifying step 545 may also include attributing information or properties to reflecting and/or luminescent particles. Such information or properties include any combination of, but are not limited to: the position of the particle on the reference image; information representing the position of the particle on the reference image (e.g. the position of the particle on the reference image defined by the geometric center of a particle on the reference image or its angular position and/or distance to other particles); shape, size, brightness, color, excitation and decay of the particles; and information representing shape, size, brightness, color, excitation and decay of the particles.

For instance, the angular relationship between particles may an information that is attributed to selected particles. In some examples, when three (e.g. any random or the brightest or the largest or the smallest or of the predetermined color or shape) reflecting and/or luminescent particles on the reference image are selected, the values of three angles of the triangle formed by these three particles can be determined to characterize their relative positions. This method is described in more detail in e.g. EP 2 318 286 B1 which is incorporated herein by reference thereto. In other examples, if more than three reflecting and/or luminescent particles (random, brightest, smallest, largest or of the predetermined color or shape) are used, then a plurality of triangles can be formed, each triangle being formed by any specific combination of three particles from the selected number of particles.

In other cases, the distance between particles may be an information that is attributed to selected particles. In some examples, distances between a number of the reflecting and/or luminescent particles can be determined. For instance, a number of the reflecting and/or luminescing particles may be arbitrarily selected or be selected according to a selection criteria, e.g. their proximity to each other, their proximity to a reference point, or their shape, size, brightness, color, excitation or decay. Then the distance between pairs, triplets, quadruplets, quintets, etc. of particles may be determined. In some examples, it may be particularly advantageous that a central particle is selected (arbitrarily or according to any of the aforementioned selection criteria) and then its distance to a number of other particles is determined. Said number of other particles is not particularly limited and may include all particles, an arbitrary choice or a selection of particles (in descending or ascending order) according to a selection criterium. Selection criteria may include: proximity (e.g. neighboring or closest particles) or again any of the aforementioned other selection criteria. Relatively small number of selected particles (e.g. 3 or 4 particles) may already be sufficient to reliably authenticate a security label. However, a larger number of particles such as any of 5, 6, 7, 8, 9, 10, 11, 12, or even more than 12 is also contemplated. In yet other examples, distances of the selected reflecting and/or luminescent particles relative to a reference point of the first security mark can be determined, for instance to its geometrical center, a marking or a corner. For example, a number of reflecting and/or luminescent particles (e.g., three, four, five, or more particles) can be selected that have the closest location with respect to a predetermined reference point.

In the examples of the above two paragraphs, the particles may appear as (irregular) spots (or pixel groups) on the reference image. In such but also other cases, the angles and/or distances between particles may be measured by first determining the geometric center of the resulting spots as recorded on the reference image and then measuring the angles and/or distances between said geometric centers. Methods of determining the geometric center are well-known in the art and include *i.a.* the method of minimizing the sum of squared Euclidean distances between the geometric center to be found and each point in the set of points (or pixels) making up the particle. Such a method is *i.a.* described in Protter, Murray H.; Morrey, Jr., Charles B. (1970), College Calculus with Analytic Geometry (2nd ed.), page 520. The geometric center obtained in this way may also be referred to as a geometric median. In other examples, a centroid of the spot as recorded on the reference image can be taken as the geometric center. The centroid may be the arithmetic mean position of all the points (pixels) constituting the spot on a plane (e.g. the reference image). In an example, not the geometric center itself is used as attributed information but instead the pixel on the reference image closest to the computed geometrical center of the corresponding spot is selected for attributing information to the respective particle.

Another example of attributing information or properties to reflecting and/or luminescent particles in the identifying step 545 includes the following: When reflecting and/or luminescent particles are provided inside the first security mark (for instance, inside a foil or coating), depths of particles within the first security mark may also be determined and attributed to the selected particles. For instance, the depth of a particle within the first security mark may be measured by determining a (minimum) distance from the particle (or the aforementioned geometric center of the particle) to the surface of the first security mark. Such a measurement can be made by means of a camera equipped with two lenses and said distances can be determined using digital post-processing using the different viewing angles afforded by the two lenses on the camera.

When attributing information or properties to reflecting and/or luminescent particles in the identifying step 545, any combination of the above-listed examples is also contemplated by the present specification. Such a combination may be particularly advantageous for further improving the reliability of the authentication method.

In the techniques of the present disclosure, the information or properties attributed in identifying step 545 may be stored, e.g., in an electronic database for a subsequent authentication. In an example, the attributed information or properties can be transmitted to the electronic database by an imaging device or another device (e.g., via the Internet) used at the stage of registering or marking the authentic product. In addition or alternatively, attributed information stored in an electronic database may be transmitted - independent or in combination with a reference image - to a mobile device participating in the authentication process upon request by said mobile device.

In some examples of the present techniques, computing 540 the projection image can further comprise identifying 555 reflecting and/or luminescing particles from the plurality of reflecting particles on the recognition image. Said identifying step 555 is not particularly limited and may include the selection of any number of particles according to any of the selection criteria and/or examples outlined above for identifying step 545. Moreover, the identifying step 555 may also include attributing information or properties to reflecting and/or luminescent particles as outlined for identifying step 545.

Coming back to the details of the step of computing 540 the projection image itself:
In some examples of the techniques of the present disclosure, computing 540 the projection image by projecting the recognition image on the reference image based on the determined deviation may comprise projecting 565 the image and/or attributed information of selected reflecting and/or luminescent particles of the recognition image on the reference image using image transformation. In some examples, computing 540 the projection image by projecting the reference image on the recognition image based on the determined deviation may comprise projecting 565 the image and/or attributed information of selected reflecting and/or luminescent particles of the reference image on the recognition image using the image transformation.

In some examples and in accordance with the above disclosure, using the image transformation can comprise applying a calculated image transformation that maps the second orientation mark as recorded on the recognition image to the first orientation mark as recorded on the reference image to the attributed coordinates or the attributed information of the selected reflecting and/or luminescent particles of the recognition image. In other examples, using the image transformation can involve using a calculated image transformation that maps the first orientation mark as recorded on the reference image to the second orientation mark as recorded on the recognition image. Specifically, in these examples, using the image transformation can involve calculating an image transformation that is inverse with respect to said calculated image transformation and then applying the inverse image transformation to the attributed coordinates or the attributed information of the selected reflecting and/or luminescent particles of the recognition image.

The next step of the authentication process involves comparing 580 the computed projection image with the respective reference or recognition image. Based on the comparison step, it can be ultimately determined whether the product to be authenticated is the authentic product or a counterfeit. These steps will be elaborated in more detail below.

The comparing 580 step of the computed projection image may comprise, for example, calculating differences 585 between the projected attributed information or properties of selected reflecting and/or luminescent particles of the computed projection image and the attributed information or properties of selected reflecting and/or luminescent particles of the reference image. In other examples, said comparing 580 step may involve calculating differences 585 between the projected attributed information or properties of the selected reflecting and/or luminescent particles of the computed projection image and the attributed information or properties of the selected reflecting and/or luminescent particles of the respective reference image. The nature of such differences is not particularly limited and may include a difference in a numerical value (e.g. a different angular relationship between particles, a different distance between particles, a different size of a particle, a different decay rate), a different property (e.g. a different color) or the absence of a property in either the computed projection image or the reference/recognition image (e.g. luminescence for a particle in only one image).

In some examples, comparing step 580 is carried out with a subset of particles identified/selected during the projection step 540. In particular, it may be sufficient to continue comparing step 580 until a difference 585 is identified. At this point, depending on the needs of precision, the product may already be marked as fraudulent. However, it is also envisaged (and may be particularly advantageous) that comparing step 580 is continued until a second, third, fourth or any other suitable number of differences is identified before the product is marked as fraudulent. This may help in increasing the reliability of the method.

In some examples, in comparing step 580, a number of reflecting and/or luminescent particles identified on the recognition image may be selected in accordance with one or more of the examples for selection procedure for identifying step 545. Likewise, in comparing step 580, a number of reflecting and/or luminescent particles identified on the reference image may be selected in accordance with one or more embodiments of the selection procedure disclosed further above for identifying step 545. Although not strictly necessary for all embodiments, the manner of identification may in particular be identical in comparing step 580 and identifying step 545 (or more generally, projecting step 540). The number of particles processed in the identifying step 545 (or more generally, projecting step 540) and in comparing step 580 may be the same or different.

In the techniques of the present disclosure, the step of comparing 580 may further include calculating 595 a measure of deviation between the computed projection image and the respective reference image or recognition image based on the calculated differences. Such a measure may be useful in reliably determining whether a product is fraudulent or not, for instance by allowing a certain degree of tolerance in the authentification method and, thus, preventing false-negative results. In some examples, the measure of deviation may be based on a set of ratios between the differences in the respective attributed coordinates of the selected reflecting and/or luminescent particles calculated at the comparing 580 step and a spatial characteristic of the first security mark or the second security mark (for example, a length, a width, a perimeter or some other characteristics of the first or second security mark like a label, QR-code, barcode etc. as recorded on the reference or recognition image may be taken for this purpose). For example, the measure of deviation can be an average ratio calculated within the set of ratios mentioned above. In other examples, the measure of deviation can be based on a set of ratios between the differences in the respective attributed information of the identified reflecting and/or luminescent particles (i.e., the information representing any one or more of the shape, size, brightness, color, excitation and decay of the particles) calculated at the comparing 580 step and the corresponding predefined characteristic (for example, the characteristic related to any one or more of the shape, size, brightness, color, excitation and decay of the particles). For example, the measure of deviation can be an average ratio calculated within the set of ratios related to any one or more of the shape, size, brightness, color, excitation and decay of the particles mentioned above.

According to the present specification, in some examples, determining 500 whether the product to be authenticated is authentic or counterfeit can comprise classifying 600 the product to be authenticated as authentic if the measure of deviation is smaller than a predetermined threshold value and otherwise classifying the product to be authenticated as counterfeit. The predetermined threshold value is not particularly limited and may depend on the authentication principle used and the degree of false-positive and false-negative results considered to be acceptable for the particular application. For example, the product to be authenticated can be classified as authentic if the (average) ratio with respect to the differences in the attributed coordinates or in the attributed information disclosed further above does not exceed the value of about 0.001, or the value of about 0.01, or the value of about 0.1, or the value of about 0.25. In other examples of the present techniques, the step 500 of determining can involve classifying the product to be authenticated as authentic if the measure of deviation is larger than a predetermined threshold value and otherwise classifying the product to be authenticated as counterfeit. For example, the product to be authenticated can be classified as authentic if the measure of deviation based on the average ratio with respect to the differences in the attributed coordinates or in the attributed information, e.g., when the measure of deviation is inversely proportional to said average ratio, is larger than the value of about 1000, or the value of about 100, or the value of about 10, or the value of about 4. Such ratios may be particularly useful in the aforementioned examples.

In some examples, the predetermined threshold value may depend on a specific measure of deviation or several measures of deviations selected for the classification step. For example, a predetermined threshold value may be depend on an average ratio based on the differences in the attributed coordinates or on the differences in the attributed information regarding shape, size, brightness, color, excitation and/or decay. In other examples, the predetermined threshold value may take into account service provider or user preferences. In some examples, this may imply that the predetermined threshold value is selected depending on the risk of false positives (i.e., when the product to be authenticated is classified as counterfeit while it is not) or false negatives (i.e., when the product to be authenticated is classified as authentic while it is not). In other words, the predetermined threshold value may depend on which of the two outcomes is less desirable in order to avoid possible frustration of a user. Thus, the predetermined threshold value may be individually set on a case-by-case basis to represent a desired balance between the degree of counterfeiting protection and degree of potential frustration of a user.

It should be understood that the term predetermined threshold value implies that the threshold value is determined prior the user of the mobile device requests an authentification via his/her device. However, this does not necessarily mean that the predetermined threshold value does not change over time, for instance due to feedback during use suggesting that the degree of false-negative or false-positive authentication results is too high. Such a dynamic "in-use" adaption of the predetermined threshold value may allow to manage and maintain an authentication process for a launched series of products and to balance user satisfaction vs. authentication needs in a dynamic process (e.g. in cases where it turns out after product launch that a larger-than expected portion of the security labels are soiled while on the shelf for sale producing too many false-negative results). Turning to the technical implementation, in some examples, the method of authentification may comprise the step of electronically receiving on the mobile device information regarding the predetermined threshold value from a server. In other examples, the method of authentification may comprise the steps of modifying (e.g. calculating based on prior authentication results) a predetermined threshold, storing the modified predetermined threshold value on a server and electronically receiving on the mobile device information regarding the modified predetermined threshold value from the server.

In the following, further examples according to the present disclosure are discussed:
The techniques of the present disclosure can further comprise recording a plurality of reference images including the first orientation mark and the first security mark from a plurality of positions relative to the first orientation mark of the authentic product. In an example, the plurality of reference images may be recorded by an imaging device (such as, e.g., a digital camera) used at the stage of registering or marking the authentic product. In some examples, the plurality of reference images including the first orientation mark and the first security mark can be recorded from a plurality of first recording angles relative to the first orientation mark or from a plurality of first recording distances relative to the first orientation mark. In other examples, the plurality of reference images including the first orientation mark and the first security mark can be recorded from both a plurality of first recording angles relative to the first orientation mark and from a plurality of first recording distances relative to the first orientation mark. In some examples, two or more first recording angles from the plurality of first recording angles can be different from each other. In other examples, all of the first recording angles from the plurality of first recording angles can be different. In yet other examples, two or more first recording distances from the plurality of first recording distances can be different from each other. In still other examples, all of the first recording distances from the plurality of first recording distances can be different.

In a next step, a plurality of differences between the first orientation mark as recorded on the plurality of reference images and the second orientation mark as recorded on the recognition image can be calculated based on the digital image analysis. In some examples, the plurality of differences between the first orientation mark as recorded on the plurality of reference images and the second orientation mark as recorded on the recognition image can be associated with a plurality of differences between the plurality of first recording angles and the second recording angle (i.e., the angle relative to the second orientation mark at which the recognition image is recorded on the mobile device of the product to be authenticated). In addition or alternatively, said difference can be associated with a plurality of differences between the plurality of first recording distances and the second recording distance (i.e., the distance relative to the second orientation mark at which the recognition image is recorded on the mobile device of the product to be authenticated). In some examples, said plurality of differences can be calculated in a fashion similar to that disclosed further above in connection with calculating the difference between the first and second orientation marks when using a single reference image. In some examples of the present techniques, the first orientation mark as recorded on the plurality of reference images can be mapped to the second orientation mark as recorded on the recognition image. In other examples, the second orientation mark as recorded on the recognition image can be mapped to the first orientation mark as recorded on the plurality of reference images. In an example, the mapping step can be carried out similar to that described further above when a single reference image is considered.

In some examples, the method may include (as a next step) arranging the calculated plurality of differences in ascending or descending order. Then, one or more reference images having one or more smallest differences from the arranged plurality of differences can be selected from the plurality of reference images. In other examples, a plurality of weighting factors can first be calculated by weighting the plurality of differences. This way may be efficient in embodiments where some differences from the plurality of differences are deemed to be, e.g., less important than the others. For example, the differences associated with recording distances may be considered less important than those associated with recording angles. In some examples, the next step can comprise arranging the calculated plurality of weighting factors in ascending or descending order. Then, one or more reference images can be selected from the plurality of reference images that have one or more smallest weighting factors from the arranged plurality of weighting factors. Thus, in some examples, this procedure allows selecting the one or more reference images that can be the best candidates for the subsequent authentication process, thereby skipping a computationally demanding comparison related to the analysis of the plurality of randomly distributed reflecting and/or luminescent particles on all reference images with respect to the recognition image. Furthermore, in some examples, it may be useful to select a single reference image that is closest (or most similar) to the recognition image (i.e. the reference image having the smallest difference or the smallest weighting factor as described above). It should be noted that in some examples, the one or more reference images selected from the plurality of reference images may not always be the same images, as their selection is directly dependent on the position of the mobile device relative to the second orientation mark of the product to be authenticated when the recognition image is captured on the mobile device (e.g., different users may hold mobile devices in different positions with respect to the product to be authenticated).

In some examples of the present techniques, the suitability of particles for the authentication process may be analyzed on basis of the reference images. This may be advantageous in determining particles in the security label of the authentic product which may be more difficult to properly identify, for instance because they have a different shape or a different color impression when viewed from angles. Such particles may be classified as less suitable or unsuitable for the subsequent authentication process. This may help in increasing the robustness of the method by excluding less reliable particles from consideration.

Specifically, in some examples, the method may comprise analyzing a suitability of particles from the plurality of randomly distributed reflecting and/or luminescent particles of the first security mark for the authentication process based on the recorded plurality of reference images. In some examples, analyzing the suitability can include classifying particles from the plurality of randomly distributed reflecting and/or luminescent particles as being suitable or unsuitable for the authentication process or, in particular, classifying each particle from the plurality of randomly distributed reflecting and/or luminescent particles as being suitable or unsuitable for the authentication process. When referring to classifying particles as being suitable or unsuitable for the authentication process, it should be understood that this does not exclude further classes (e.g. intermediate suitabilities or a "tentative" group) but merely implies that the particles are classified in at least two groups one of which represents a class of particles having a higher suitability for the authentication process than the other.

In some examples, classifying may include identifying particles from the plurality of randomly distributed reflecting and/or luminescent particles on the plurality of reference images. Said identifying step can be performed in analogy to the identifying 545 step elucidated further above with respect to a single reference image. In particular, particles from the plurality of randomly distributed reflecting and/or luminescent particles may be classified to be suitable for the authentication process based on the identifying step. In some examples, each of the particles from the plurality of randomly distributed reflecting and/or luminescent particles may be classified in this way.

In some examples, particles from the plurality of randomly distributed reflecting and/or luminescent particles may be classified to be suitable if said particles are identified on each of the plurality of reference images or if said particles are identified in more than a predefined percentage of the plurality of reference images. Again, each of the particles from the plurality of randomly distributed reflecting and/or luminescent particles may be classified in this way. Suitable a predefined percentage of reference images are not particularly limited and may include e.g. in more than about 40%, or in more than about 60%, or in more than about 80% of reference images.

The techniques of the present disclosure can further comprise methods which may facilitate the authentication by suitable interaction with the operator of the mobile device during the authentication process.

In some examples, the method may comprise, subsequently to the determining (510) a deviation between the reference image and the recognition image based on a digital image analysis, wherein said deviation is associated with a difference between the recording position relative to the first orientation mark and the recording position relative to the second orientation mark, the steps of instructing the operator of the mobile device to change to a new position of the mobile device relative to the second orientation mark if a said deviation exceeds a predetermined threshold deviation value. Said predetermined threshold deviation value is not particularly limited and may i.a. depend on the authentication principle. For instance, if the authentication is based on the shape of the particles, the threshold deviation value may be selected to be relatively low since a large angular deviation from the acquisition angle of the reference image may be detrimental to the accuracy of the authentication Instructing the operator of the mobile device to change to a new position of the mobile device relative to the second orientation mark may in particular include a new angular position and/or a new distance but may also involve tilting of the mobile device.

In some examples, the operator of the mobile device may be instructed to change to a new recording position relative to the second orientation mark on basis of a calculation reducing said deviation between the reference image and the recognition image. Thus, the operator is provided guidance on how and where to reposition the mobile device (e.g. "move 3 cm to the left"). The method may also be iterative in that further recognition images are acquired and analyzed in accordance with the present methods and in that the instructions to the operator of the mobile device are adjusted on basis of the changing deviation associated with a difference between the recording position relative to the first orientation mark and the recording position relative to the second orientation mark. For instance, the mobile device may instruct its operator to move to the left until the aforementioned deviation is reduced below the predetermined threshold deviation value. At this point, the mobile device instructs its operator to maintain the position.

In some examples wherein a plurality of reference images from a plurality of positions relative to the first orientation mark are acquired, the method may also comprise determining a plurality of deviations between the first orientation mark as recorded on the plurality of reference images and the second orientation mark as recorded on the recognition image based on the digital image analysis. Checking deviations with respect to multiple references may reduce the burden on the operator to find a suitable new acquisition position. The determining the plurality of deviations step may be carried out as for the determining 510 step disclosed further above with respect to a single reference image. In a next step, the operator of the mobile device may be instructed to change to a new position of the mobile device relative to the second orientation mark if a predetermined number of deviations from the plurality of deviations exceeds a predetermined threshold deviation value. The predetermined number of deviations is not particularly limited and can be as low as one and as high as the number of reference images minus one. In the former case, the method is relatively restrictive in that it frequently instructs the operator to change to a new position. In the latter case, the method is relatively permissive in that tolerates many deviations between the recognition image and reference images. In these examples, the predetermined threshold deviation value may be as defined above. Alternatively, it can be an average or weighted average individually calculated on basis of the reference images for each first security mark.

In some of the aforementioned examples, the predetermined threshold deviation value may be individually calculated on basis of the plurality of reference images for each first security mark. This information may be stored in a database until required for the authentication process. In this way, and considering that the particles of the first security mark are randomly distributed, random distributions which may pose more difficulty in the authentification process (e.g. due to overlapping particles) may be attributed with higher predetermined threshold deviation values and/or a lower predetermined number of deviations to reduce any potential user frustration.

In some examples, the individual calculation of the predetermined threshold deviation value on basis of the plurality of reference images may also serve as basis for discarding first security marks during production as unsuitable for reliable authentication.

In a second aspect, the present disclosure also relates to a method for an optical product authentication.

The method of the present technique may provide an authentic product including a first security mark, wherein the first security mark may comprise two or more sets of randomly distributed luminescent particles. The number of particles within each set of randomly distributed luminescent particles is not particularly limited and can be as defined for the plurality of randomly distributed particles above. At least one set of randomly distributed luminescent particles from the two or more sets may have a first decay time and another set of randomly distributed luminescent particles from the two or more sets may have a second decay time that is different from the first decay time. In some examples, the first decay time may be selected in the millisecond range or smaller, or in the range of 10 second or smaller, or in the range of 30 minutes or smaller. The second decay time can be selected, for example, about 1.1 times to about 10 times larger than that of the first decay time. Thus, in these examples, the particles from the second set can emit electromagnetic radiation (e.g. light) in a longer time interval than the particles from the first set after the pumping electromagnetic radiation (e.g. a flash from a smart phone) is switched off. In other examples, further sets (e.g. a third, or any number selected from 3, 4, 5 or 6) of randomly distributed luminescent particles may be used, each of which has a decay time that is different from the first and second decay times. In many examples, the sets of randomly distributed luminescent particles situation may additionally luminesce in different colors and/or be of different size or shape.

In a next step, the method comprises illuminating the first security mark with an electromagnetic radiation which causes the two or more sets of randomly distributed luminescent particles to luminesce, followed by terminating the electromagnetic radiation. After terminating the electromagnetic radiation, the method provides a plurality of reference images including the first security mark. The plurality of reference images may be provided at predetermined points in time based on the decay time of at least one of the sets of randomly distributed luminescent particles. Suitable predetermined time points are not particularly limited as long as they are matched to the decay time of at least one of the sets of randomly distributed luminescent particles such that the plurality of reference images is acquired over a time span which allows to determine the decay time and/or allows to capture the time point at which at least some of the luminescing particles stop luminescing. Non-limiting examples of predetermined points in time may be providing reference images at intervals of about 100 ms to about 1 s over a time period of about 500 ms to about 10 s. Another example may be providing reference images at intervals of about 0.01 to about 0.1 decay times of a set of luminescing particles over a time period of about 0.5 to about 10 decay times of said set of luminescing particles. It is in particular contemplated that the predetermined time points are based on the decay time of majority or all sets of randomly distributed luminescent particles. In some examples, it is also contemplated that the predetermined points in time cover a time interval which is selected such that at end of the time interval the luminescent particles from the longest lasting set of particles can still luminesce while the luminescent particles o the remainder of the sets are no longer capturable by the imaging device.

In a next step, the method involves providing a product to be authenticated comprising a second security mark, wherein the second security mark comprises a plurality of luminescent particles. The details of the second security may be as elaborated for the first aspect of the present disclosure. Then, the method involves illuminating the second security mark with an electromagnetic radiation which is able to create luminescence in the two or more sets of randomly distributed luminescent particles, followed by terminating the electromagnetic radiation. In some examples, in particular in cases where the mobile device is a smart phone or a tablet equipped with a digital camera and a flash, the electromagnetic radiation comprises light between about 380 to about 750 nm.

In a next step, the method involves providing a plurality of recognition images including the second security mark at predetermined points in time based on the decay time of at least one of the sets of randomly distributed luminescent particle. The details of said (second) predetermined points in time may be the same as elaborated above.

In a next step, the method involves comparing a time-dependent series of the plurality of reference images with a time-dependent series of the plurality of recognition images based on a digital image analysis. The time-dependent series of the plurality of reference images and the time-dependent series of the plurality of recognition images is not particularly limited and refers to a sorting of the images according to their time of acquisition. In some examples, the predetermined points in time at which the plurality of recognition images are provided can coincide with those at which the plurality of reference images are provided. In some examples, forming pairs of reference images and recognition images having the same or approximately the same (e.g. within about 0.5 sec time difference or within +/- about 20% of the total time scale time difference) may be part of the comparing step. Otherwise, the details of comparing step may be the same as elaborated above.

Finally, the method involves determining whether the product to be authenticated is the authentic product or a counterfeit based on the comparing step. The details of said step may be the same as elaborated above

According to the second aspect of the present specification, the method can further include recording a reference video (e.g., by the imaging device like a digital camera) over a predetermined period of time including the first orientation mark and the first security mark from a position relative to the first orientation mark. In some examples, the present method can also include recording on a mobile device (e.g., a smart phone camera or a tablet) a recognition video including the second orientation mark and the second security mark from a position relative to the second orientation mark. The method of the second aspect can further include determining whether the product to be authenticated is the authentic product or the counterfeit by carrying out an authentication process comprising the steps of generating the plurality of reference images from the reference video at the predetermined points in time and generating the plurality of recognition images from the recognition video at the predetermined points in time. The next step can involve, similar to the techniques presented further above with respect to the first aspect, determining a deviation between the first orientation mark as recorded on the plurality of reference images and the second orientation mark as recorded on the plurality of recognition images based on the digital image analysis, wherein said deviation is associated with a difference between the recording position relative to the first orientation mark and the recording position relative to the second orientation mark. The details of this ste may be described for the first aspect of the present disclosure. In a next step, a plurality of projection images can be computed by projecting a number of and optionally each recognition image from the plurality of recognition images on a reference image from the plurality of reference images corresponding to the closest or the same predetermined point in time. Alternatively, the plurality of projection images can be computed by projecting a number of and optionally each reference image from the plurality of reference images on a recognition image from the plurality of recognition images corresponding to the closest or the same predetermined point in time. The details for this step may be outlined above for the first aspect. In some examples, this step may comprise computing a time-dependent series of the plurality of projection images by projecting recognition images from the plurality of recognition images on reference images from the plurality of reference images or by projecting reference images from the plurality of reference images on recognition images from the plurality of recognition images. The further step for performing the authentication process may include comparing the computed plurality of projection images with the respective plurality of reference images or recognition images.

In some examples, the method may also involve comparing a time-dependent series of the plurality of reference images with a time-dependent series of the plurality of recognition images based on a digital image analysis which includes analyzing a pattern of diminishing luminescence of luminescing particles and/or a pattern of luminescing particles disappearing or changing over time. The pattern is not particularly limited and in particular includes a pattern of time-dependent local luminescence-related events such as the loss of luminescence at about the same coordinates at about the same time. This pattern of diminishing or vanishing luminescent particles may be a unique fingerprint which can be utilized for authentication.

The further examples and details disclosed for the first aspect of the present disclosure are equally applicable to the second aspect of the present disclosure.

In a third aspect, the present disclosure relates to a security mark, in particular for use in the method according to the first and second aspect. The security mark comprises a plurality of randomly distributed reflecting and/or luminescent particles. Said plurality is not particularly limited but may in particular be as defined above for the first and second aspect. In this aspect, the size of the particles should be larger than about 0.5 µm, specifically larger than about 1 µm and in particular larger than about 5 µm, to facilitate the optical imaging by a mobile device such as a smartphone camera or a tablet. Particle sizes below the aforementioned size ranges may not be readily detectable by cameras installed in mass-market smart phones and tablets.

When referring to particle size in this context (or elsewhere), it should be understood that particle size may refer to the particle size as apparent to an optical imaging device, i.e. to the two-dimensional representation of the particle on the recorded image. In some examples, the particle size may be determined by imaging the security mark from an angle which is substantially perpendicular or perpendicular to the plane of the security mark and determining the largest dimension of the particle in question. It should also be understood that it is not necessary that all particles contained within or on the security mark have to be larger than the aforementioned size criteria. Instead, it is sufficient that the number of particles fulfilling the aforementioned size criteria allows to carry out the authentication method.

The plurality of randomly distributed reflecting and/or luminescent particles may reflect and/or luminesce in a color that is only reproducible for a laser or ink jet printer by a half-tone or dithering process. Half-tone and dithering processes are used for printing color images. The general idea is that by varying the density of the four secondary printing colors (cyan, magenta, yellow, and black (abbreviation CMYK)), any particular color impression can be provided by fooling the human eye into interpreting neighboring or overlapping dots of distinct color as a single color. Specifically, the half-tone is based on using dots of various size and different spacing in between to simulate continuous-tone imagery, while the dithering process applies a specially designed random noise background on top of the printed image to create the illusion of greater color depth in images. In other words, both half-tone and dithering are the processes used to fool the human eye. Accordingly, it is more difficult to counterfeit a security mark comprising particles as defined in this third aspect of the disclosure by conventional printing or copying techniques since the optical imaging system of a mobile device such as a smartphone camera or a tablet camera can - in contrast to the human eye - distinguish between the aforementioned colored pigments in a reference image and colored "imitates" provided by half-tone or dithering processes on a recognition image.

The term color is not intended to be limiting in this context and is in particular meant to refer to light reflected/emitted at different wavelengths (or optionally at intensities varying over a range of wavelengths) in the vis-range (about 380 to about 750 nm) or close to the vis-range in a range that is detectable by cameras used in mobile devices such as smart phones or tablets (e.g. about 300 to about 1000 nm, more specifically about 350 to about 900 nm and in particular about 365 to about 850 nm). In some instances, color may be defined as light having a spectral range occupying only a fraction of the visible spectrum, for instance, about 1% or less of the visible spectrum, or about 10% or less of the visible spectrum, or about 20% or less of the visible spectrum) that is only reproducible by a laser or ink jet printer by a half-tone or dithering process.

In some embodiments, the particles may reflect or luminesce in a color that is not cyan, magenta, yellow, black or white. This may further help in frustrating counterfeiting attempts with the most common copiers and printers.

In some embodiments, the particles may additionally have a particle size of less than about 200 µm, specifically less than about 100 µm and in particular less than about 50 µm. This may further help in frustrating counterfeiting attempts since particles of such small sizes are more difficult to reproduce with common copiers and printers, in particular if the particles do not reflect and/or luminesce in cyan, magenta, yellow, black or white.

Alternatively or additionally, in some embodiments, the plurality of randomly distributed reflecting and/or luminescent particles may comprise particles reflecting and/or luminescing in at least two different colors, in particular in at least 5 or at least 6 or at least 7 different colors. Such color differences can be realized by e.g. mixing different types of pigments or particles. Again, such a measure may frustrate counterfeiting attempts since it makes the security mark more difficult to reproduce. Moreover, if at least 5 colors are used, conventional copying machines and household printers (e.g. CYMK printers) must use a half-tone or dithering process to reproduce a regardless of the four colors the printer is equipped with.

Related to the third aspect, in a fourth aspect, the present disclosure also relates to a security mark, in particular for use in the method according to the first and second aspect. The security mark comprises a plurality of randomly distributed reflecting and/or luminescent particles, wherein the particles have a particle size of larger than about 0.5 µm and the particles reflect and/or luminesce in at least two different colors, in particular in at least 5, 6 or 7 different colors. In some embodiments, the particles may have a particle size of less than about 200 µm, specifically less than about 100 µm and in particular less than about 50 µm.

The definitions and embodiments recited for the third aspect of the present disclosure are equally applicable to the fourth aspect of the present disclosure.

The methods according to the first and second aspect of the present disclosure may also be computer-implemented.

In particular, the present disclosure also pertains to a database configured to store reference images and/or reference image information generated in the method according to the first and second aspect. The present disclosure also pertains to a software including computer-executable instructions for performing the according to the first and second aspect when the software is executed on a computer or computer network. It also pertains to a software for installing on a mobile device, wherein the software includes computer-executable instructions for use in performing the method according to the first and second aspect, wherein the software is configured to upload, from the mobile device, said recognition image(s) recorded on the mobile device; and/or download said reference image(s) to the mobile device.

Although specific embodiments of the present disclosure have been disclosed for illustrative purposes, those skilled in the art will appreciate that various modifications and alterations are possible, without departing from the spirit of the present disclosure. It is also to be understood that such modifications and alterations are incorporated in the scope of the present disclosure and the accompanying claims.

The present disclosure further relates to following list of embodiments, the contents of which are intended to be freely combinable with other parts of the aforementioned disclosure.
1. A method for an optical product authentication, the method comprising:
   providing (100) an authentic product comprising a first orientation mark and a first security mark, wherein the first security mark comprises a plurality of randomly distributed reflecting and/or luminescent particles;
   recording (200) a reference image including the first orientation mark and the first security mark from a position relative to the first orientation mark;
   providing (300) a product to be authenticated comprising a second orientation mark and a second security mark, wherein the second security mark comprises a plurality of reflecting and/or luminescent particles;
   recording (400) on a mobile device a recognition image including the second orientation mark and the second security mark from a position relative to the second orientation mark; and
   determining (500) whether the product to be authenticated is the authentic product or a counterfeit by carrying out an authentication process comprising the following steps:
      - determining (510) a deviation between the reference image and the recognition image based on a digital image analysis, wherein said deviation is associated with a difference between the recording position relative to the first orientation mark and the recording position relative to the second orientation mark;
      - computing (540) a projection image by projecting the recognition image on the reference image or the reference image on the recognition image based on the determined deviation;
      - comparing (580) the computed projection image with the respective reference image or recognition image.
2. The method of clause 1, wherein determining (510) the deviation between the reference image and the recognition image based on the digital image analysis includes determining (515) a deviation between the first orientation mark as recorded on the reference image and the second orientation mark as recorded on the recognition image.
3. The method of clause 1 or 2, wherein determining (510) the deviation between the reference image and the recognition image based on the digital image analysis includes one of a), b) or c):
   a) determining a deviation between the first orientation mark as recorded on the reference image and the second security mark as recorded on the recognition image;
   b) determining a deviation between the first security mark as recorded on the reference image and the second security mark as recorded on the recognition image;
   c) determining a deviation between the first security mark as recorded on the reference image and the second orientation mark as recorded on the recognition image.
4. The method of any one of clauses 1 to 3, wherein recording (200) the reference image from the position relative to the first orientation mark includes recording the reference image at a first recording angle and at a first recording distance relative to the first orientation mark of the authentic product.
5. The method of any one of clauses 1 to 4, wherein recording (400) on the mobile device the recognition image from the position relative to the second orientation mark includes recording the recognition image at a second recording angle and at a second recording distance relative to the second orientation mark of the product to be authenticated.
6. The method of clause 1 or 2, wherein determining (510; 515) the deviation comprises calculating (520) a difference between the first orientation mark as recorded on the reference image and the second orientation mark as recorded on the recognition image.
7. The method of clauses 4 to 6, wherein the difference between the first orientation mark as recorded on the reference image and the second orientation mark as recorded on the recognition image is associated with a difference between the first recording angle and the second recording angle, between the first recording distance and the second recording distance, or between both the first recording angle and the second recording angle and the first recording distance and the second recording distance.
8. The method of any one of clauses 1 to 7, wherein determining (510; 515) the deviation comprises mapping (525) the first orientation mark as recorded on the reference image to the second orientation mark as recorded on the recognition image or mapping (525) the second orientation mark as recorded on the recognition image to the first orientation mark as recorded on the reference image.
9. The method of clause 8, wherein mapping (525) comprises calculating an image transformation (530) that maps the first orientation mark as recorded on the reference image to the second orientation mark as recorded on the recognition image or an image transformation that maps the second orientation mark as recorded on the recognition image to the first orientation mark as recorded on the reference image.
10. The method of any one of clauses 1 to 9, wherein computing (540) the projection image comprises identifying (545) reflecting and/or luminescent particles from the plurality of randomly distributed reflecting and/or luminescent particles on the reference image, wherein said identifying includes:
   a) attributing coordinates representing relative positions of the particles on the reference image to the particles; or / and
   b) analyzing any one or more of the shape, size, brightness, color, excitation and decay of the particles and attributing information representing any one or more of their shape, size, brightness, color, excitation and decay and their relative positions on the reference image to the particles.
11. The method of clause 10, alternative a), wherein attributing coordinates comprises calculating (550) average positions of spots on the reference image corresponding to the identified reflecting and/or luminescent particles on the reference image.
12. The method of any one of clauses 1 to 11, wherein computing the projection image comprises identifying (555) reflecting and/or luminescent particles from the plurality of reflecting and/or luminescent particles on the recognition image, wherein said identifying includes:
   a) attributing coordinates representing relative positions of the particles on the recognition image to the particles; or / and
   b) analyzing any one or more of the shape, size, brightness, color, excitation and decay of the particles and attributing information representing any one or more of their shape, brightness, color, excitation and decay and their relative positions on the recognition image to the particles.
13. The method of clause 12, alternative a), wherein attributing coordinates comprises calculating (560) average positions of spots on the recognition image corresponding to the identified reflecting and/or luminescent particles on the recognition image.
14. The method of any one of clauses 9 to 13 and 12, wherein computing (540) the projection image by projecting the recognition image on the reference image based on the determined deviation comprises projecting (565) the attributed coordinates or the attributed information of the identified reflecting and/or luminescent particles of the recognition image on the reference image using the image transformation.
15. The method of clauses 10 or 11 and 14, wherein comparing (580) the computed projection image comprises calculating differences (585) between the projected attributed coordinates or the projected attributed information of the identified reflecting and/or luminescent particles of the computed projection image and the attributed coordinates or the attributed information of the identified reflecting and/or luminescent particles of the respective reference image.
16. The method of any one of clauses 9 to 13 and 10, wherein computing (540) the projection image by projecting the reference image on the recognition image based on the determined deviation comprises projecting the attributed coordinates or the attributed information of the identified reflecting and/or luminescent particles of the reference image on the recognition image using the image transformation.
17. The method of clauses 12 or 13 and 16, wherein comparing (580) the computed projection image comprises calculating differences (590) between the projected attributed coordinates or the projected attributed information of the identified reflecting and/or luminescent particles of the computed projection image and the attributed coordinates or the attributed information of the identified reflecting and/or luminescent particles of the respective recognition image.
18. The method of clauses 16 or 17, wherein comparing (580) further includes calculating (595) a measure of deviation between the computed projection image and the respective reference image or recognition image based on the calculated differences.
19. The method of clause 18, wherein determining (500) whether the product to be authenticated is authentic or counterfeit comprises classifying (600) the product to be authenticated as authentic if the measure of deviation is smaller than a predetermined threshold value and otherwise classifying the product to be authenticated as counterfeit, or classifying the product to be authenticated as authentic if the measure of deviation is larger than a predetermined threshold value and otherwise classifying the product to be authenticated as counterfeit.
20. The method of any one of clauses 1 to 19, wherein the method comprises recording a plurality of reference images including the first orientation mark and the first security mark from a plurality of positions relative to the first orientation mark of the authentic product.
21. The method of clause 20, wherein the plurality of reference images including the first orientation mark and the first security mark are recorded from a plurality of first recording angles relative to the first orientation mark, from a plurality of first recording distances relative to the first orientation mark, or both.
22. The method of clause 21, wherein the method further comprises calculating a plurality of differences between the first orientation mark as recorded on the plurality of reference images and the second orientation mark as recorded on the recognition image based on the digital image analysis.
23. The method of clauses 21 or 22, wherein the method further comprises mapping the first orientation mark as recorded on the plurality of reference images to the second orientation mark as recorded on the recognition image or mapping the second orientation mark as recorded on the recognition image to the first orientation mark as recorded on the plurality of reference images.
24. The method of clause 22, wherein the method further comprises arranging the calculated plurality of differences in ascending or descending order and selecting one or more reference images from the plurality of reference images having one or more smallest differences from the arranged plurality of differences.
25. The method of clause 22, wherein the method further comprises:
   calculating a plurality of weighting factors by weighting the plurality of differences;
   arranging the calculated plurality of weighting factors in ascending or descending order; and
   selecting one or more reference images from the plurality of reference images having one or
   more smallest weighting factors from the arranged plurality of weighting factors.
26. The method of clause 20, the method comprising analyzing a suitability of particles from the plurality of randomly distributed reflecting and/or luminescent particles of the first security mark for the authentication process based on the recorded plurality of reference images.
27. The method of clause 26, wherein analyzing the suitability includes classifying particles from the plurality of randomly distributed reflecting and/or luminescent particles as being suitable or unsuitable for the authentication process.
28. The method of clause 27, wherein classifying includes identifying particles from the plurality of randomly distributed reflecting and/or luminescent particles on the plurality of reference images.
29. The method of clause 28, wherein particles from the plurality of randomly distributed reflecting and/or luminescent particles are classified to be suitable for the authentication process based on the identifying step.
30. The method of clauses 28 or 29, wherein particles from the plurality of randomly distributed reflecting and/or luminescent particles are classified to be suitable if said particles are identified on each of the plurality of reference images or if said particles are identified in more than a predefined percentage of the plurality of reference images.
31. The method of any one of clauses 20 to 30, wherein the method comprises, subsequently to the determining (510) a deviation between the reference image and the recognition image based on a digital image analysis, wherein said deviation is associated with a difference between the recording position relative to the first orientation mark and the recording position relative to the second orientation mark:
   instructing the operator of the mobile device to change to a new position of the mobile device relative to the second orientation mark if a said deviation exceeds a predetermined threshold deviation value.
32. The method of clause 31, wherein the operator of the mobile device is instructed to change to a new recording position relative to the second orientation mark on basis of a calculation reducing said deviation between the reference image and the recognition image.
33. The method of any one of clauses 20 to 30, wherein the method comprises:
   determining a plurality of deviations between the first orientation mark as recorded on the plurality of reference images and the second orientation mark as recorded on the recognition image based on the digital image analysis;
   instructing the operator of the mobile device to change to a new position of the mobile device relative to the second orientation mark if a predetermined number of deviations from the plurality of deviations exceeds a predetermined threshold deviation value.
34. The method of clause 33, wherein the operator of the mobile device is instructed to change to a new recording position relative to the second orientation mark on basis of a calculation reducing said predetermined number of deviations between the reference image and the recognition image.
35. A method for an optical product authentication, the method comprising:
   providing an authentic product comprising a first security mark, wherein the first security mark comprises two or more sets of randomly distributed luminescent particles, wherein at least one set of randomly distributed luminescent particles from the two or more sets has a first decay time and another set of randomly distributed luminescent particles from the two or more sets has a second decay time that is different from the first decay time;
   illuminating the first security mark with an electromagnetic radiation which causes the two or more sets of randomly distributed luminescent particles to luminesce;
   terminating the electromagnetic radiation;
   after termination of said electromagnetic radiation, providing a plurality of reference images including the first security mark at predetermined points in time based on the decay time of at least one of the sets of randomly distributed luminescent particles;
   providing a product to be authenticated comprising a second security mark, wherein the second security mark comprises a plurality of luminescent particles;
   illuminating the second security mark with an electromagnetic radiation which is able to create luminescence in the two or more sets of randomly distributed luminescent particles;
   terminating the electromagnetic radiation;
   after termination of said electromagnetic radiation, providing a plurality of recognition images including the second security mark at predetermined points in time based on the decay time of at least one of the sets of randomly distributed luminescent particles;
   comparing a time-dependent series of the plurality of reference images with a time-dependent series of the plurality of recognition images based on a digital image analysis;
   determining whether the product to be authenticated is the authentic product or a counterfeit based on the comparing step.
36. The method of clause 35, wherein the authentic product further comprises a first orientation mark and the product to be authenticated comprises a second orientation mark, wherein the method comprises:
   recording a reference video including the first orientation mark and the first security mark from a position relative to the first orientation mark;
   recording on a mobile device a recognition video including the second orientation mark and
   the second security mark from a position relative to the second orientation mark;
   wherein determining whether the product to be authenticated is the authentic product or the counterfeit includes carrying out the following steps:
      - generating the plurality of reference images from the reference video;
      - generating the plurality of recognition images from the recognition video;
      - determining a deviation between the first orientation mark as recorded on the plurality of reference images and the second orientation mark as recorded on the plurality of recognition images based on the digital image analysis, wherein said deviation is associated with a difference between the recording position relative to the first orientation mark and the recording position relative to the second orientation mark;
      - computing a time-dependent series of the plurality of projection images by projecting recognition images from the plurality of recognition images on reference images from the plurality of reference images or by projecting reference images from the plurality of reference images on recognition images from the plurality of recognition images;
      - comparing the computed time-dependent series of the plurality of projection images with the respective time-dependent series of the plurality of reference images or recognition images.
37. The method of clause 35, wherein comparing a time-dependent series of the plurality of reference images with a time-dependent series of the plurality of recognition images based on a digital image analysis includes analyzing a pattern of diminishing luminescence of luminescing particles and/or a pattern of luminescing particles disappearing over time.
38. The method of any one of clauses 1 to 37, wherein the first security mark comprises a plurality of randomly distributed reflecting and/or luminescent particles having a particle size of larger than 0.5 µm and wherein the particles reflect and/or luminesce in a color that is only reproducible by a laser or ink jet printer by a half-tone or dithering process.
39. The method of clause 38, wherein the particles of the first security mark reflect and/or luminesce in a color that is not cyan, magenta, yellow, black or white.
40. The method of any one of clauses 1 to 39, wherein the particles of the first security mark have a particle size of less than 200 µm, specifically less than 100 µm and in particular less than 50 µm.
41. The method according to any one of clauses 38 to 40, wherein the plurality of randomly distributed reflecting and/or luminescent particles comprises particles reflecting and/or luminescing in at least two different colors, in particular in at least 5 different colors.
42. The method of any one of clauses 1 to 41, wherein one or more particles from the plurality of randomly distributed luminescent particles comprise a luminescent material that luminesces electromagnetic radiation in a visible light spectrum.
43. The method of clause 42, wherein the luminescent material is excited by an ambient light or by a flash to luminesce electromagnetic radiation in the visible light spectrum.
44. A security mark comprising a plurality of randomly distributed reflecting and/or luminescent particles, wherein the particles have a particle size of larger than about 0.5 µm and wherein the particles reflect and/or luminesce in a color that is only reproducible by a laser or ink jet printer by a half-tone or dithering process.
45. The security mark according to clause 44, wherein the particles reflect and/or luminesce in a color that is not cyan, magenta, yellow, black or white.
46. The security mark according to clause 44 or clause 45, wherein the particles have a particle size of less than 200 µm, specifically less than 100 µm and in particular less than 50 µm.
47. The security mark according to any one of clauses 44 to 46, wherein the plurality of randomly distributed reflecting and/or luminescent particles comprises particles reflecting and/or luminescing in at least two different colors, in particular in at least 5 different colors.
48. A security mark comprising a plurality of randomly distributed reflecting and/or luminescent particles, wherein the particles have a particle size of larger than about 0.5 µm and the particles reflect and/or luminesce in at least two different colors, in particular in at least 5 or 6 different colors.
49. The security mark of clause 48, wherein the particles have a particle size of less than about 200 µm, specifically less than about 100 µm and in particular less than about 50 µm.

## Claims

1. A method for an optical product authentication, the method comprising:
providing (100) an authentic product comprising a first orientation mark and a first security mark, wherein the first security mark comprises a plurality of randomly distributed reflecting and/or luminescent particles;
recording (200) a reference image including the first orientation mark and the first security mark from a position relative to the first orientation mark;
providing (300) a product to be authenticated comprising a second orientation mark and a second security mark, wherein the second security mark comprises a plurality of reflecting and/or luminescent particles;
recording (400) on a mobile device a recognition image including the second orientation mark and the second security mark from a position relative to the second orientation mark; and
determining (500) whether the product to be authenticated is the authentic product or a counterfeit by carrying out an authentication process comprising the following steps:
- determining (510) a deviation between the reference image and the recognition image based on a digital image analysis, wherein said deviation is associated with a difference between the recording position relative to the first orientation mark and the recording position relative to the second orientation mark;
- computing (540) a projection image by projecting the recognition image on the reference image or the reference image on the recognition image based on the determined deviation;
- comparing (580) the computed projection image with the respective reference image or recognition image.

2. The method of claim 1, wherein determining (510) the deviation between the reference image and the recognition image based on the digital image analysis includes determining (515) a deviation between the first orientation mark as recorded on the reference image and the second orientation mark as recorded on the recognition image.

3. The method of claim 1 or claim 2, wherein determining (510; 515) the deviation comprises mapping (525) the first orientation mark as recorded on the reference image to the second orientation mark as recorded on the recognition image or mapping (525) the second orientation mark as recorded on the recognition image to the first orientation mark as recorded on the reference image.

4. The method of claim 3, wherein mapping (525) comprises calculating an image transformation (530) that maps the first orientation mark as recorded on the reference image to the second orientation mark as recorded on the recognition image or an image transformation that maps the second orientation mark as recorded on the recognition image to the first orientation mark as recorded on the reference image.

5. The method of any one of claims 1 to 4, wherein computing (540) the projection image comprises identifying (545) reflecting and/or luminescent particles from the plurality of randomly distributed reflecting and/or luminescent particles on the reference image, wherein said identifying includes:
a) attributing coordinates representing relative positions of the particles on the reference image to the particles; or / and
b) analyzing any one or more of the shape, size, brightness, color, excitation and decay of the particles and attributing information representing any one or more of their shape, size, brightness, color, excitation and decay and their relative positions on the reference image to the particles.

6. The method of claim 5, alternative a), wherein attributing coordinates comprises calculating (550) average positions of spots on the reference image corresponding to the identified reflecting and/or luminescent particles on the reference image.

7. The method of any one of claims 1 to 6, wherein computing the projection image comprises identifying (555) reflecting and/or luminescent particles from the plurality of reflecting and/or luminescent particles on the recognition image, wherein said identifying includes:
a) attributing coordinates representing relative positions of the particles on the recognition image to the particles; or / and
b) analyzing any one or more of the shape, size, brightness, color, excitation and decay of the particles and attributing information representing any one or more of their shape, brightness, color, excitation and decay and their relative positions on the recognition image to the particles.

8. The method of any one of claims 1 to 7, wherein the method comprises recording a plurality of reference images including the first orientation mark and the first security mark from a plurality of first recording angles relative to the first orientation mark, from a plurality of first recording distances relative to the first orientation mark, or both.

9. The method of claim 8, wherein the method further comprises:
- calculating a plurality of differences between the first orientation mark as recorded on the plurality of reference images and the second orientation mark as recorded on the recognition image based on the digital image analysis;
- mapping the first orientation mark as recorded on the plurality of reference images to the second orientation mark as recorded on the recognition image or mapping the second orientation mark as recorded on the recognition image to the first orientation mark as recorded on the plurality of reference images; and
- arranging the calculated plurality of differences in ascending or descending order and selecting one or more reference images from the plurality of reference images having one or more smallest differences from the arranged plurality of differences.

10. The method of claim 8 or claim 9, the method comprising analyzing a suitability of particles from the plurality of randomly distributed reflecting and/or luminescent particles of the first security mark for the authentication process based on the recorded plurality of reference images, the step of analyzing said suitability including:
- identifying particles from the plurality of randomly distributed reflecting and/or luminescent particles on the plurality of reference images; and
- classifying particles from the plurality of randomly distributed reflecting and/or luminescent particles as being suitable or unsuitable for the authentication process.

11. The method of any one of claims 8 to 10, wherein the method comprises, subsequently to the determining (510) a deviation between the reference image and the recognition image based on a digital image analysis, wherein said deviation is associated with a difference between the recording position relative to the first orientation mark and the recording position relative to the second orientation mark:
instructing the operator of the mobile device to change to a new position of the mobile device relative to the second orientation mark if a said deviation exceeds a predetermined threshold deviation value.

12. The method of any one of claims 1 to 11, wherein the first security mark comprises a plurality of randomly distributed reflecting and/or luminescent particles having a particle size of larger than 0.5 µm and wherein the particles reflect and/or luminesce in a color that is only reproducible by a laser or ink jet printer by a half-tone or dithering process.

13. The method of claim 12, wherein the particles of the first security mark reflect and/or luminesce in a color that is not cyan, magenta, yellow, black or white.

14. The method of any one of claims 1 to 13, wherein the particles of the first security mark have a particle size of less than 200 µm, specifically less than 100 µm and in particular less than 50 µm.

15. The method according to any one of claims 1 to 14, wherein the plurality of randomly distributed reflecting and/or luminescent particles comprises particles reflecting and/or luminescing in at least two different colors, in particular in at least 5 different colors.
